(19) Europäisches Patentamt
European Patent Office
Office européen des brevets

(11) **EP 0 485 267 B1**

(12) **FASCICULE DE BREVET EUROPEEN**

(45) Date de publication et mention
de la délivrance du brevet:
**23.12.1998 Bulletin 1998/52**

(51) Int Cl.⁶: **H04N 9/31**, H04N 5/74

(21) Numéro de dépôt: **91402941.8**

(22) Date de dépôt: **04.11.1991**

(54) **Système de visualisation d'images fournies par un modulateur spatial avec transfert d'énergie**

Verfahren für die Wiedergabe von Bildern, erzeugt durch die Energie-Übertragung eines räumlichen Modulators

System for displaying images supplied by a spatial modulator with energy transfer

(84) Etats contractants désignés:
**DE GB IT NL**

(30) Priorité: **09.11.1990 FR 9013941**

(43) Date de publication de la demande:
**13.05.1992 Bulletin 1992/20**

(73) Titulaire: **THOMSON-CSF**
**75008 Paris (FR)**

(72) Inventeurs:
• **Puech, Claude**
  **F-92045 Paris la Défense (FR)**
• **Huignard, Jean-Pierre**
  **F-92045 Paris la Défense (FR)**
• **Papuchon, Michel**
  **F-92045 Paris la Défense (FR)**
• **Rajbenbach, Henri**
  **F-92045 Paris la Défense (FR)**
• **Loiseaux, Brigitte**
  **F-92045 Paris la Défense (FR)**

(74) Mandataire: **Guérin, Michel et al**
**Thomson-CSF Propriété Intellectuelle,**
**13, Avenue du Président Salvador Allende**
**94117 Arcueil Cédex (FR)**

(56) Documents cités:
EP-A- 0 383 646    FR-A- 2 608 792
US-A- 4 934 779

## Description

L'invention concerne un système de visualisation d'images lumineuses.

Elle est applicable plus particulièrement à la projection d'images vidéo sur grand écran.

Actuellement se développent des systèmes de projection vidéo grand écran à base de matrices actives à cristaux liquides. Ces matrices utilisent en général des cristaux liquides du type "nématique en hélice" associés à des transistors en couches minces pour l'adressage des différents pixels par le signal vidéo. Elles constituent l'équivalent de diapositives dynamiques. Les projecteurs résultant s'apparentent à des projecteurs de diapositives de part leur conception. La projection d'images couleurs est obtenue soit à partir de trois valves optiques monochromes, soit à partir d'une seule valve munie de filtres colorés selon un arrangement similaire à celui de tubes TV couleur. Un exemple d'un tel système est décrit dans EP-A-O 383 646.

Très séduisants à priori, ces projecteurs ont l'inconvénient d'un très mauvais rendement lumineux de l'ordre de quelques pourcents. Les cellules utilisées nécessitent en effet de travailler entre polariseurs croisés, ce qui implique d'une part qu'une des composantes de polarisation de la source d'éclairage n'est pas utilisée (perte de 50 %) et que d'autre part, une absorption supplémentaire due aux polariseurs utilisés est à prendre en compte. La surface utile de chaque pixel est faible (séparation entre chaque pixel, surface occupée par le transistor de commande, ...) et le sera d'autant plus que l'on voudra réaliser, à surface de cellule identique, des cellules de très haute définition compatibles avec la TVHD.

Bien que des artifices permettant d'augmenter le rendement lumineux de tels projecteurs soient actuellement étudiés, il est peu probable que l'on sache réaliser des projecteurs dépassant 10 % de rendement.

Parallèlement à l'utilisation de matrices à cristaux liquides, des solutions à base de projection laser trichromes sont également envisageables. De telles solutions font appel à des méthodes de déflexion XY de faisceaux laser par des moyens optomécaniques (y compris holographiques) et acoustooptiques. Ces solutions sont limitées par plusieurs facteurs :

- phénomènes de papillotements (dus à la non rémanence de l'écran)
- difficulté de réaliser des déflecteurs rapides à grand nombre de points tout en conservant une bonne efficacité
- existence de phénomènes parasites dus au bruit de speckle (bruit granulaire lié à la cohérence des sources laser utilisées).

La solution proposée est basée sur l'utilisation des matrices à cristaux liquides -dont le développement industriel est inéluctable- dans un système de projection permettant un rendement optimum grâce à un transfert d'énergie efficace entre un faisceau signal et un faisceau pompe.

C'est pourquoi l'invention concerne un système de visualisation d'images comprenant :

- une source lumineuse fournissant un faisceau lumineux ;
- un modulateur spatial de lumière recevant le faisceau luineux et modulant l'intensité du faisceau de telle façon qu'il transmette un faisceau modulé véhiculant l'image à visualiser ; et
- un moyen de visualisation recevant le faisceau modulé et affichant l'imge véhiculée par le faisceau ;

 caractérisé en ce qu'il comporte :

- un dispositif d'amplification optique interposé entre le modulateur et le moyen de visualisation recevant d'une part le faisceau modulé et d'autre part un deuxième faisceau utilisé comme faisceau pompe afin d'amplifier le faisceau modulé et transmettant le faisceau amplifié vers le moyen de visualisation (5, 11)

des moyens de déplacement du dispositif d'amplification optique permettant de déplacer celui-ci par rapport au faisceau modulé.

Les différents objets et caractéristiques de l'invention apparaîtront plus clairement dans la description et dans les figures annexées qui représentent :

- la figure 1, un exemple de réalisation général d'un système selon l'invention ;
- la figure 2, un exemple de réalisation détaillé d'un système selon l'invention ;
- la figure 3, un dispositif prévoyant un déplacement du milieu non linéaire ;
- la figure 4, un système selon l'invention appliqué à une projection trichrome ;
- la figure 5, une variante du système de la figure 4 ;
- la figure 6, un autre système selon l'invention appliqué à une projection trichrome.

Les techniques de transfert d'énergie entre un faisceau pompe vers un faisceau signal sont désormais bien connues. Elles reposent, entre autres, sur l'utilisation de matériaux photoréfractifs (BSO, $BaTiO_3$, SBN, ...).

La solution proposée consiste à utiliser cet effet de transfert d'énergie pour pallier le mauvais rendement du projecteur classique utilisant des matrices actives à cristaux liquides.

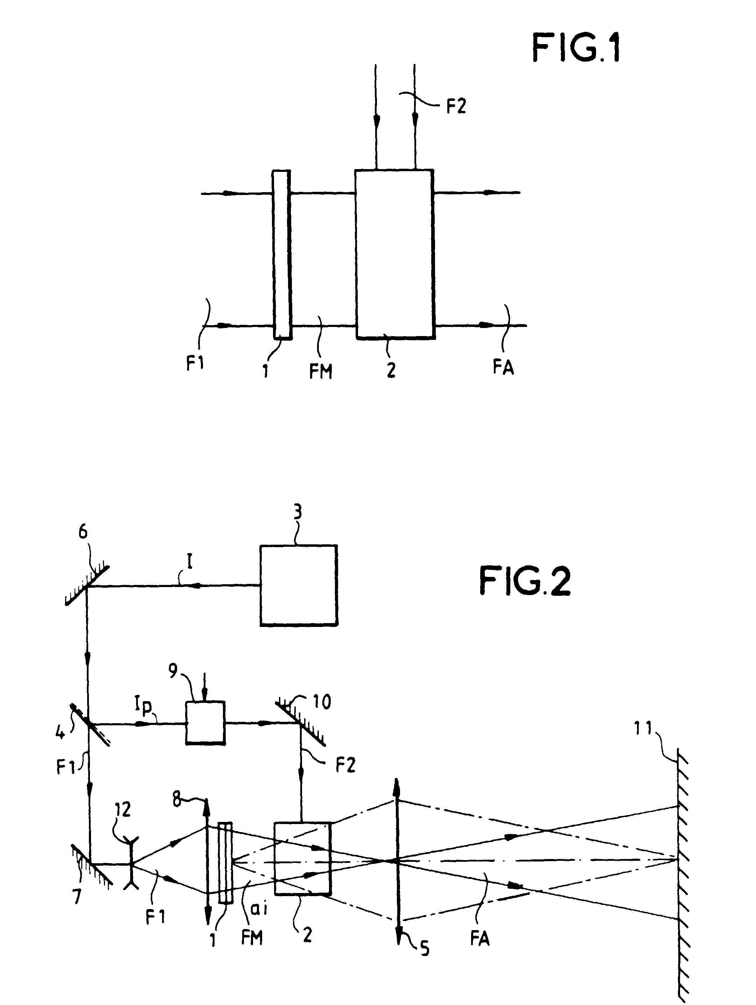

L'exemple de réalisation général de la figure 1 comporte un modulateur spatial de lumière 1 recevant un premier faisceau F1 et transmettant un faisceau modulé FM véhiculant ainsi une image selon la modulation spatiale effectuée. Le modulateur spatial 1 est par exemple une cellule à cristal liquide.

Un dispositif à transfert d'énergie 2 tel qu'un milieu non linéaire, un cristal photoréfractif par exemple, reçoit le faisceau modulé FM et un deuxième faisceau F2 de telle sorte qu'un transfert d'énergie se fasse du deuxième faisceau F2 vers le faisceau modulé FM. On obtient ainsi un faisceau modulé à afficher FA fortement amplifié. Pour cela, les deux faisceaux F2 et FM ont la même longueur d'onde et leur angle fait un angle déterminé selon la nature du matériau photoréfractif comme cela est connu dans la technique.

La figure 2 représente un exemple de réalisation détaillé du dispositif de l'invention.

Ce dispositif comporte essentiellement :

- une source de lumière polarisée 3 (laser) émettant un faisceau F1 ;
- un séparateur de faisceau 4 séparant le faisceau FI en un faisceau de forte intensité F2 et un faisceau de faible intensité F1 ;
- un modulateur spatial de lumière 1 tel qu'un écran à cristal liquide recevant le faisceau de faible intensité F1 et transmettant un faisceau modulé FM ;
- un dispositif à transfert d'énergie tel qu'un milieu non linéaire 2, par exemple un cristal photoréfractif, recevant le faisceau modulé FM de faible intensité ainsi que le faisceau de forte intensité F2 et opérant un transfert de l'énergie du faisceau F2 vers le faisceau FM ;
- un objectif 5 permet d'afficher le faisceau FA obtenu sur un écran 11.

Le fonctionnement de ce dispositif est donc le suivant.

Le rayonnement issu du laser 3 est séparé en deux faisceaux F1 et F2 d'intensités inégales i et Ip. Le faisceau de faible intensité F1 est dirigé vers la matrice à cristaux liquides de manière à l'éclairer d'une manière similaire à celle employée dans un projecteur classique (à noter que, le laser pouvant avantageusement être polarisé, il permet de supprimer le polariseur d'entrée d'un système de projection classique et de gagner au moins 3 dB sur le bilan lumineux).

Nous avons vu précédemment pour quelles raisons le rendement lumineux d'un projecteur à cristal liquide était faible. Soit a ce rendement ($\alpha \ll 1$). A la sortie de la valve optique et du polariseur, l'intensité lumineuse est donc ($\alpha .i$).

Le faisceau F2 de forte intensité Ip est utilisé comme faisceau pompe, afin d'amplifier le faisceau FM à faible niveau issu du modulateur 1. Pour ce faire les faisceaux FM et F2 d'intensités Ip et ($\alpha .i$) sont combinés dans le milieu photoréfractif 2 (cristal de titanate de baryum par exemple) de manière à transférer l'énergie du faisceau pompe F2 vers le faisceau modulé FM. Ce transfert peut s'effectuer avec un excellent rendement si le rapport Ip/($\alpha .i$) est grand ($10^3$ par exemple), si les angles entre faisceau modulé FM et faisceau pompe F2 sont correctement ajustés (le gain dépend du pas de franges -ce pas étant caractéristique du matériau photoréfractif utilisé- typiquement quelques microns pour le titanate de baryum avec une bande passante angulaire suffisante pour amplifier un faisceau présentant un spectre angulaire, comme celui issu de la valve) et si le faisceau signal a une densité de l'intensité de l'ordre de quelques mW/cm². Le rendement de l'interaction de transfert peut atteindre 100 % dans des matériaux tels que BaTiO$_3$ et SBN.

Toutes choses égales par ailleurs, on peut comparer ce que serait le rendement $\eta_1$ d'un système de projection utilisant directement le faisceau laser d'intensité I dans un système de projection classique et le rendement $\eta_2$ dans un système de projection selon l'invention faisant appel au procédé de transfert d'énergie dans un matériau photoréfractif tel que décrit précédemment :

$$\eta_1 = \alpha$$

$$\eta_2 = Ip/I = I-i/I$$

Sachant que ($\alpha .i$) doit être de l'ordre de 1 à 10 mW et que le rapport Ip/$\alpha .i \simeq 10^3$ (avec $\alpha \simeq 5$ %) pour des surfaces d'interaction de l'ordre du cm².

Dans le cas où ($\alpha .i$) = 1 mW, i = 20mW et Ip = 1 W avec I = 1,02 W. Cette solution permet une projection sur un écran de l'ordre de 1 m². Alors que dans la solution classique on ne disposerait que d'une puissance de l'ordre de 50 mW par m².

Dans le cas où ($\alpha .i$) = 10 mW, i = 200 mW et Ip = 10 W avec I = 10, 2 W. Cette solution permet une projection sur un écran de l'ordre de 10 m². Dans la solution classique, on ne disposerait que d'une puissance de l'ordre de 500 mW ce qui serait à peine suffisant pour projeter sur un écran de 1 m².

Il est à noter également que dans la solution classique où une grande partie du faisceau d'éclairage est interceptée par la cellule à cristaux liquides, celle-ci risque d'être détériorée par le fait d'un échauffement important lorsqu'un laser de forte puissance est employé pour compenser la faible efficacité lumineuse du système.

Le système de l'invention permet donc en outre de résoudre les problèmes éventuels d'échauffement du cristal liquide.

Dans les deux cas évoqués plus haut, les puissances requises pour les lasers sont compatibles avec celles de lasers existants. Laser argon ou krypton, mais aussi laser Nd : YAG doublé. Le développement des technologies de pompage par diodes laser de puissance, de lasers solides du type Nd : YAG, doit permettre la réalisation de sources laser à haut rendement et grande durée de vie, à coût réduit et à servitudes simplifiées.

Pour la projection d'images animées à la cadence télévision, il est important que le temps de réponse du matériau photoréfractif utilisé soit approprié. Le temps de réponse du BSO est de l'ordre de 20 msec et donc compatible avec l'application envisagée. Le BaTi0$_3$ peut également être utilisé. Il permet un transfert d'énergie total et a un temps de réponse qui dépend de la densité de puissance. Pour qu'il ait des temps de réponse compatibles avec une cadence télévision, il faut des densités de puissance importantes, de l'ordre de 1 à quelques watt/cm$^2$, ce qui correspond aux ordres de grandeur envisagés précédemment.

Le dispositif de la figure 2 comporte également des dispositifs permettant de rendre le système de l'invention plus compact. Il s'agit notamment de dispositifs de réflexion 6,7 et 10 permettant de renvoyer les faisceaux lumineux dans les directions appropriées.

Une lentille divergente 12 permet de répartir le faisceau F1 sur toute la surface du modulateur spatial 1. Une lentille de focalisation 8 permet de focaliser le faisceau modulé FM au centre optique de l'objectif 5 de façon à collecter le maximum d'énergie dans l'objectif.

Par ailleurs, sur le trajet du faisceau pompe F2 est placé un contrôleur de polarisation tel qu'une lame demi-onde ou une combinaison d'une lame demi-onde et d'une lame quart-d'onde permettant de transmettre un faisceau pompe F2 de polarisation adaptée au cristal photoréfractif 2.

Pour obtenir une projection de qualité, il faut s'affranchir des problèmes de bruit qui peuvent être observés dans les expériences d'amplification dans les matériaux photoréfractifs dus à l'amplification de la lumière diffusée parasite et aux réflexions internes. On peut réduire le bruit par une légère rotation du cristal photoréfractif au cours de l'interaction comme cela est décrit dans le Brevet français FR-A-2 647 229.

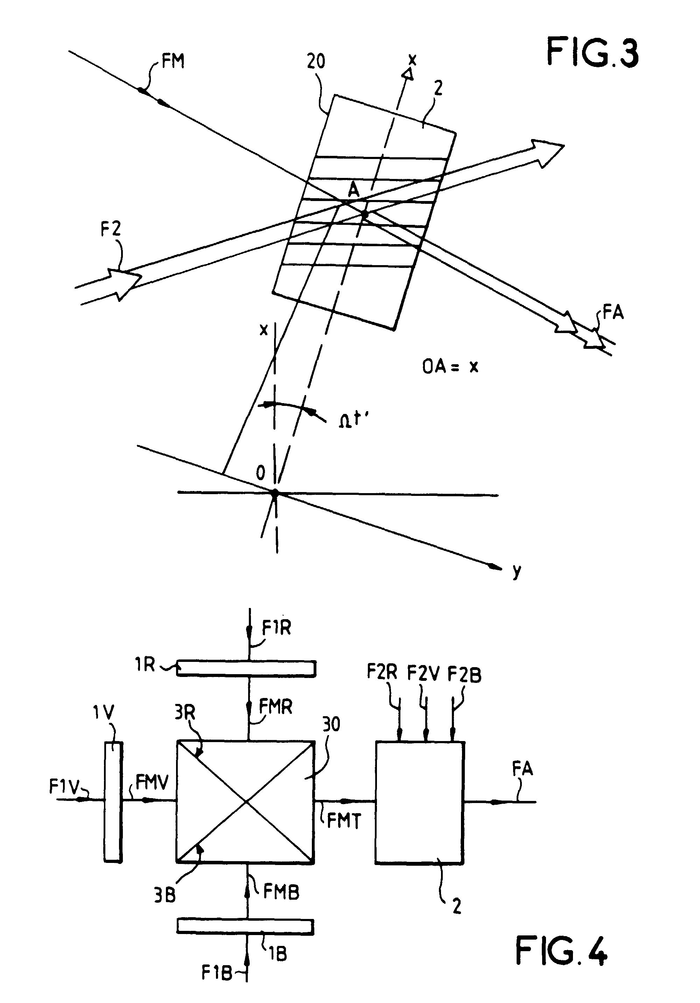

Le- faisceau modulé FM à amplifier interfère avec le faisceau de pompe F2 dans le milieu non linéaire 2 (cristal photoréfractif). Pour réduire considérablement le bruit, voire l'éliminer, on empêche donc l'établissement des interférences génératrices de bruit en bougeant, par rotation autour d'un axe le milieu non linéaire. La figure 3 représente une telle disposition. Le cristal photoréfractif 2 reçoit le faisceau modulé FM et le faisceau de pompe F2 selon un angle approprié. Selon la figure 3, le cristal 2 reçoit les deux faisceaux par une même face 20.

Des moyens non représentés associés au milieu photoréfractif 2 permettent de faire osciller autour d'une position moyenne celui-ci autour d'un axe 0 de telle façon que la face d'entrée 20 du cristal photoréfractif tourne par rapport au faisceau modulé et au faisceau pompe.

De plus pour que le mouvement du cristal permette de perturber l'établissement des interférences dans le cristal on prévoira avantageusement que l'axe 0 soit situé en dehors du cristal et de préférence à une distance sensiblement égale à la hauteur du cristal comme cela est représenté sur la figure 3.

Il résulte de l'observation du signal amplifié et du bruit amplifié qu'il faut que la vitesse de déplacement du cristal soit suffisante pour affecter l'amplification du bruit mais inférieure à une valeur limite pour affecter que très peu le mécanisme de gain sur le faisceau modulé qui est beaucoup plus rapide à s'établir.

On a constaté que la constante de temps d'établissement des réseaux d'interférence correspondant au bruit étant plus longue que celle correspondant au signal, une rotation de l'ordre du degré par seconde est suffisante pour gagner un facteur important en rapport signal à bruit (expérimentalement un facteur 20 a été démontré) et obtenir une image amplifiée sans bruit. Le dispositif de projection proposé devrait grandement bénéficier de cette possibilité. L'éventuel léger déplacement de l'image sur l'écran qui pourrait résulter de ce mouvement alternatif du cristal peut être facilement compensé par un système optique approprié. Ce système est constitué par exemple par une lame à faces parallèles oscillant en sens inverse du cristal photoréfractif 2 et de sensiblement même indice de réfraction que le cristal 2.

A chaque instant, le cristal 1 et la lame à faces parallèles ont des positions symétriques par rapport à une direction perpendiculaire à la direction de propagation du faisceau modulé FM. Dans ces conditions, les faisceaux modulé FM et amplifié FA sont toujours sensiblement colinéaires.

La projection trichrome peut être obtenue à partir de trois systèmes indépendants similaires à celui décrit. Elle impose que l'on puisse disposer de cristaux photoréfractifs ayant des propriétés similaires dans le bleu, le vert et le rouge. Aujourd'hui, les cristaux du type BaTi0$_3$ fonctionnent bien dans le vert et le bleu-vert. Ils sont par contre un peu moins sensibles dans le rouge. Une optimisation des dopages permet de pallier cet inconvénient.

Dans ce cas là, les trois faisceaux correspondant aux trois couleurs (rouge, bleu, vert) sont traités spatialement par des modulateurs spatiaux. On utilise par exemple un arrangement tel que représenté en figure 4. Les trois faisceaux rouge (F1R), vert (F1V), et bleu (F1B) sont traités par des modulateurs spatiaux 1R, 1V, 1B. Les faisceaux modulés FMR, FMV, FMB sont transmis à un cube dichroique. La face 3R du cube réfléchi le faisceau rouge FMR. La face 3B réfléchie le faisceau bleu FMB. Le faisceau vert FMV traverse le cube sans réflexion. Les trois faisceaux sont donc regroupés en un seul faisceau FMT qui est amplifié comme précédemment dans un dispositif de transfert d'énergie 2 pour donner un faisceau amplifié FA. Pour le transfert d'énergie, le dispositif 2 reçoit trois faisceaux pompes F2R, F2V, F2B correspondant au trois couleurs rouge, vert, bleu et fournis de préférence par les mêmes sources lumineuses qui ont fourni les faisceaux F1R, F1V et F1B.

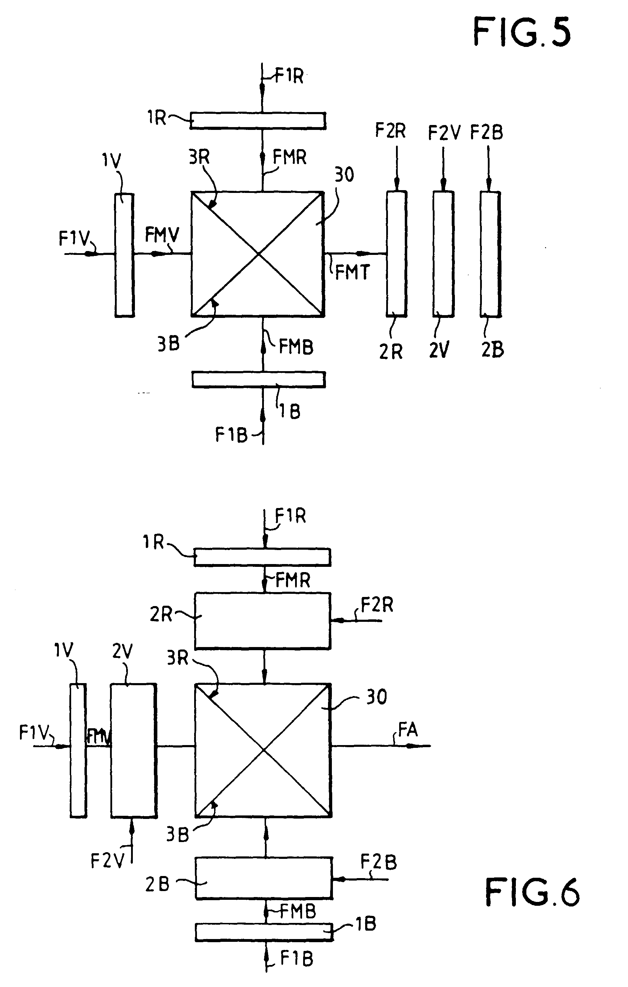

Il est également possible de réaliser le système de l'invention en utilisant deux ou trois cristaux photoréfractifs placés en série à la place du cristal photoréfractif 2. La figure 5 représente une telle disposition où chaque cristal 2R, 2V, 2B permet de n'amplifier qu'un faisceau d'une seule longueur d'onde et est transparent aux autres longueurs d'ondes.

Le cristal 2R reçoit donc le faisceau pompe F2R (couleur rouge) et permet d'amplifier la composante rouge du faisceau FMT. Il est transparent aux composantes verte et bleue du faisceau FMT.

Le fonctionnement des cristaux 2V et 2B est similaire pour les composantes verte et bleue respectivement.

On peut également, comme cela est représenté en figure 6, associer un dispositif de transfert 2R, 2V, 2B d'énergie à chaque modulateur spatial 1R, 1V, 1B et de recombiner les trois faisceaux modulés qu'après amplification.

Le système de l'invention est applicable à un système ne comportant qu'un seul modulateur spatial. Dans ce cas, les rayonnements issus des trois lasers seraient, par l'intermédiaire de matrices de lentilles ou d'hologrammes, focalisés sur les différents pixels de manière à réaliser l'équivalent d'une alternance de pixels rouges, verts, bleus.

L'amplification serait réalisée en appliquant les dispositions des figures 4 ou 5.

Il est bien évident que la description qui précède n'a été faite qu'à titre d'exemple. D'autres variantes peuvent être envisagées sans sortir du cadre de l'invention. Notamment, la nature des modulateurs spatiaux ainsi que des dispositifs de transfert d'énergie (ou dispositif d'amplification) peuvent être différents de ce qui a été indiqué précédemment.

**Revendications**

1. Système de visualisation d'images comprenant :

   - une source lumineuse (3) fournissant un faisceau lumineux (I) ;
   - un modulateur spatial de lumière (1) recevant le faisceau lumineux (I) et modulant l'intensité du faisceau de telle façon qu'il transmette un faisceau modulé véhiculant l'image à visualiser ; et
   - un moyen (5, 11) de visualisation recevant le faisceau modulé (FM) et affichant l'image véhiculée par le faisceau ;

   caractérisé en ce que :

   - la source lumineuse est une source laser et que le faisceau lumineux qu'elle émet constitue un premier faisceau laser ;
   - un dispositif d'amplification optique (2) interposé entre le modulateur (1) et le moyen de visualisation (5, 11) recevant d'une part le premier faisceau laser modulé (FM) et d'autre part un deuxième faisceau laser (F2) utilisé comme faisceau pompe afin d'amplifier le faisceau modulé (FM) et transmettant le faisceau amplifié vers le moyen de visualisation (5, 11) ;
   - des moyens de déplacement du dispositif d'amplification optique (2) permettant de déplacer celui-ci par rapport au faisceau modulé.

2. Système selon la revendication 1, caractérisé en ce qu'il comporte une lentille de focalisation (8) placée sur le trajet du premier faisceau (F1) et focalisant le faisceau modulé au centre optique d'un objectif de projection (5).

3. Système selon la revendication 1, caractérisé en ce que le modulateur spatial (1) est un dispositif à cristal liquide.

4. Système selon la revendication 1, caractérisé en ce que le dispositif d'amplification optique (2) est un cristal photoréfractif.

5. Système selon la revendication 1, caractérisé en ce que le premier faisceau lumineux (F1) et le deuxième faisceaux lumineux (F2) sont polarisés d'une même polarisation.

6. Système selon la revendication 5, caractérisé en ce que le premier (F1) et le deuxième faisceaux (F2) lumineux sont fournis par une même source lumineuse (3) et qu'un dispositif de séparation (4) sépare un faisceau fourni par cette source en un premier faisceau (F1) de faible intensité et un deuxième faisceau (F2) de forte intensité.

7. Système selon la revendication 1, caractérisé en ce que les moyens de déplacement permettent de faire osciller le dispositif d'amplification optique (2) par rapport à un axe fixe (O).

8. Système selon la revendication 7, caractérisé en ce qu'il comporte une lame à faces parallèles qui tourne par rapport à l'axe fixe (O) en sens inverse du dispositif d'amplification optique (2) afin de compenser le déplacement de l'image causé par le mouvement du dispositif d'amplification optique (2) et dont la position est symétrique à chaque instant de la position du dispositif d'amplification par rapport à une direction perpendiculaire à la direction de propagation du faisceau modulé.

9. Système selon la revendication 1, caractérisé en ce qu'il comporte plusieurs modulateurs spatiaux de lumière (1R, 1V, 1B) recevant chacun un faisceau lumineux (F1R, F1V, F1B) d'une longueur d'onde particulière ; un dispositif d'amplification optique (2) associé à chaque modulateur spatial recevant un faisceau modulé par le modulateur spatial et un faisceau pompe (F2R, F2V, F2B) et fournissant un faisceau modulé amplifié ; un dispositif de combinaison (30) de faisceaux recevant les faisceaux modulés amplifiés fournis par des dispositifs d'amplification optique (2) et fournissant un faisceau combiné (FA).

10. Système selon la revendication 1, caractérisé en ce qu'il comporte plusieurs modulateurs spatiaux de lumière (IR, IV, 1B) modulant des faisceaux de longueurs d'ondes déterminées ; un dispositif de combinaison de faisceaux (30) recevant les faisceaux modulés par les modulateurs et fournissant un faisceau combiné (FMT) ; un dispositif d'amplification optique (2) recevant le faisceau combiné et un faisceau pompe contenant lesdites longueurs d'ondes (ou plusieurs faisceaux ayant lesdites longueurs d'ondes).

11. Système selon la revendication 9, caractérisé en ce qu'il comporte plusieurs dispositifs d'amplification optique (2R, 2V, 2B) placés en série sur le faisceau combiné recevant chacun un faisceau pompe d'une desdites longueurs d'ondes ; chaque dispositif d'amplification optique permettant d'amplifier une ou plusieurs longueurs d'ondes et étant transparent aux autres longueurs d'ondes.

12. Système selon la revendication 1, caractérisé en ce que le modulateur spatial reçoit au moins trois faisceaux de longueurs d'ondes différentes, ces trois faisceaux étant focalisés sur trois éléments de modulation différents du modulateur spatial de façon à ce qu'ils puissent être modulés différemment, les trois faisceaux modulés étant ensuite transmis à un ou plusieurs dispositifs d'amplifications communs.

**Patentansprüche**

1. Bildanzeigesystem, mit:

   - einer Lichtquelle (3), die ein Lichtstrahlenbündel (I) liefert;
   - einem räumlichen Lichtmodulator (1), der das Lichtstrahlenbündel (I) empfängt und die Intensität des Strahlenbündels in der Weise moduliert, daß er ein moduliertes Strahlenbündel überträgt, das das anzuzeigende Bild transportiert; und
   - einem Anzeigemittel (5, 11), das das modulierte Strahlenbündel (FM) empfängt und das vom Strahlenbündel transportierte Bild anzeigt;

   dadurch gekennzeichnet, daß:

   - die Lichtquelle eine Laserquelle ist und das Lichtstrahlenbündel, das sie aussendet, durch ein erstes Laser-strahlenbündel gebildet ist;

   - eine Lichtverstärkungsvorrichtung (2) vorgesehen ist, die zwischen den Modulator (1) und das Anzeigemittel (5, 11) eingefügt ist und einerseits das modulierte erste Laserstrahlenbündel (FM) und andererseits ein zweites Laserstrahlenbündel (F2) empfängt, das als Pumpstrahlenbündel verwendet wird, um das modulierte Strahlenbündel (FM) zu verstärken, und das verstärkte Strahlenbündel an das Anzeigemittel (5, 11) überträgt;
   - Mittel zum Verschieben der Lichtverstärkungsvorrichtung (2) vorgesehen sind, die die Verschiebung dieser Vorrichtung in bezug auf das modulierte Strahlenbündel ermöglichen.

2. System nach Anspruch 1 dadurch gekennzeichnet, daß es eine Fokussierungslinse (8) enthält, die in der Bahn des ersten Strahlenbündels (F1) angeordnet ist und das modulierte Strahlenbündel auf das optische Zentrum eines Projektionsobjektivs (5) fokussiert.

3. System nach Anspruch 1, dadurch gekennzeichnet, daß der räumlich Modulator (1) eine Flüssigkristallvorrichtung ist.

4. System nach Anspruch 1, dadurch gekennzeichnet, daß die Lichtverstärkungsvorrichtung (2) ein lichtbrechender Kristall ist.

5. System nach Anspruch 1, dadurch gekennzeichnet, daß das erste Lichtstrahlenbündel (F1) und das zweite Lichtstrahlenbündel (F2) mit der gleichen Polarisation polarisiert sind.

6. System nach Anspruch 5, dadurch gekennzeichnet, daß das erste (F1) und das zweite (F2) Lichtstrahlenbündel von derselben Lichtquelle (3) geliefert werden und daß eine Trennvorrichtung (4) ein von dieser Quelle geliefertes Strahlenbündel in ein erstes Strahlenbündel (F1) mit geringer Intensität und in ein zweites Strahlenbündel (F2) mit hoher Intensität trennt.

7. System nach Anspruch 1, dadurch gekennzeichnet, daß die Verschiebungsmittel ermöglichen, die Lichtverstärkungsvorrichtung (2) in bezug auf eine feste Achse (O) oszillieren zu lassen.

8. System nach Anspruch 7, dadurch gekennzeichnet, daß es ein Plättchen mit parallelen Flächen enthält, das sich um eine feste Achse (0) in entgegengesetzter Richtung zur Lichtverstärkungsvorrichtung (2) dreht, um die durch die Bewegung der Lichtverstärkungsvorrichtung (2) verursachte Bildverschiebung zu kompensieren, und dessen Position in jedem Zeitpunkt zur Position der Verstärkungsvorrichtung in bezug auf eine zur Ausbreitungsrichtung des modulierten Strahlenbündels senkrechte Richtung symmetrisch ist.

9. System nach Anspruch 1, dadurch gekennzeichnet, daß es mehrere räumliche Lichtmodulatoren (1R, 1V, 1B), die jeweils ein Lichtstrahlenbündel (F1, R, F1V, F1B) mit einer besonderen Wellenlänge empfangen; eine Lichtverstärkungsvorrichtung (2), die jedem räumlichen Modulator zugeordnet ist und ein vom räumlichen Modulator moduliertes Strahlenbündel sowie ein Pumpstrahlenbündel (F2R, F2V, F2B) empfängt und ein verstärktes moduliertes Strahlenbündel liefert; und eine Strahlenbündelkombinationsvorrichtung (30), die die von den Lichtverstärkungsvorrichtungen (2) gelieferten verstärkten modulierten Strahlenbündel empfängt und ein kombiniertes Strahlenbündel (FA) liefert, enthält.

10. System nach Anspruch 1, dadurch gekennzeichnet, daß es mehrere räumlich Lichtmodulatoren (1R, 1V, 1B), die Strahlenbündel mit bestimmten Wellenlängen modulieren; eine Strahlenbündelkombinationsvorrichtung (30), die die von den Modulatoren modulierten Strahlenbündel empfängt und ein kombiniertes Strahlenbündel (FMT) liefert; und eine Lichtverstärkungsvorrichtung (2), die das kombinierte Strahlenbündel und ein die Wellenlängen umfassendes Pumpstrahlenbündel (oder mehrere Strahlenbündel mit den Wellenlängen) empfängt, enthält.

11. System nach Anspruch 9, dadurch gekennzeichnet, daß es mehrere Lichtverstärkungsvorrichtungen (2R, 2V, 2B) enthält, die im kombinierten Strahlenbündel in Serie angeordnet sind und jeweils ein Pumpstrahlenbündel mit einer der Wellenlängen empfangen; wobei jede Lichtverstärkungsvorrichtung die Verstärkung einer oder mehrerer Wellenlängen ermöglicht und für die anderen Wellenlängen durchlässig ist.

12. System nach Anspruch 1, dadurch gekennzeichnet, daß der räumliche Modulator wenigstens drei Strahlenbündel mit unterschiedlichen Wellenlängen empfängt, wobei diese drei Strahlenbündel auf drei verschiedene Modulationselemente des räumlichen Modulators in der Weise fokussiert werden, daß sie unterschiedlich moduliert werden können, wobei die drei modulierten Strahlenbündel anschließend an eine oder mehrere gemeinsame Verstärkungsvorrichtungen übertragen werden.

**Claims**

1. System for displaying images comprising:

   - a light source (3) supplying a light beam (I);

   - a spatial light modulator (1) receiving the light beam (I) and modulating the intensity of the beam in such a way that it transmits a modulated beam conveying the image to be displayed; and

   - a display means (5, 11) receiving the modulated beam (FM) and displaying the image conveyed by the beam;

   characterized in that:

   - the light source is a laser source and in that the light beam which it emits constitutes a first laser beam;

   - an optical amplifying device (2) interposed between the modulator (1) and the display means (5, 11) receiving on the one hand the first modulated laser beam (FM) and on the other hand a second laser beam (F2) used as a pump beam in order to amplify the modulated beam (FM) and transmitting the amplified beam to the display means (5, 11);

   - means of movement of the optical amplifying device (2) making it possible to move the latter with respect to the modulated beam.

2. System according to Claim 1, characterized in that it comprises a focusing lens (8) placed in the path of the first beam (F1) and focusing the modulated beam at the optical centre of a projection objective (5).

3. System according to Claim 1, characterized in that the spatial modulator (1) is a liquid crystal device.

4. System according to Claim 1, characterized in that the optical amplifying device (2) is a photorefractive crystal.

5. System according to Claim 1, characterized in that the first light beam (F1) and the second light beam (F2) are polarized with the same polarization.

6. System according to Claim 5, characterized in that the first (F1) and the second (F2) light beams are supplied by the same light source (3) and in that a splitting device (4) splits a beam supplied by this source into a first low-intensity beam (F1) and a second high-intensity beam (F2).

7. System according to Claim 1, characterized in that the means of movement make it possible to oscillate the optical amplifying device (2) with respect to a fixed axis (0).

8. System according to Claim 7, characterized in that it comprises a plate with parallel faces which rotates with respect to the fixed axis (0) in the opposite direction to the optical amplifying device (2) so as to compensate for the movement of the image caused by the motion of the optical amplifying device (2) and the position of which is symmetrical at each instant with the position of the amplifying device with respect to a direction perpendicular to the direction of propagation of the modulated beam.

9. System according to Claim 1, characterized in that it comprises several spatial light modulators (1R, 1G, 1B) each receiving a light beam (F1R, F1G, F1B) of a particular wavelength; an optical amplifying device (2) associated with each spatial modulator receiving a beam modulated by the spatial modulator and a pump beam (F2R, F2G, F2B) and supplying an amplified modulated beam; a beam combining device (30) receiving the amplified modulated beams supplied by optical amplifying devices (2) and supplying a combined beam (FA).

10. System according to Claim 1, characterized in that it comprises several spatial light modulators (IR, 1G, 1B) modulating beams of specified wavelengths; a beam combining device (30) receiving the beams modulated by the modulators and supplying a combined beam (FMT); an optical amplifying device (2) receiving the combined beam and a pump beam containing the said wavelengths (or several beams having the said wavelengths).

11. System according to Claim 9, characterized in that it comprises several optical amplifying devices (2R, 2G, 2B) placed in series on the combined beam each receiving a pump beam of one of the said wavelengths; each optical amplifying device making it possible to amplify one or more wavelengths and being transparent to the other wavelengths.

12. System according to Claim 1, characterized in that the spatial modulator receives at least three beams of different wavelengths, these three beams being focused on three different modulating elements of the spatial modulator in such a way that they can be modulated differently, the three modulated beams then being transmitted to one or more common amplifying devices.

# FIG.1

# FIG.2

FIG.3

OA = x

FIG.4

FIG.5

FIG.6